(19) Europäisches Patentamt
European Patent Office
Office européen des brevets

(11) Veröffentlichungsnummer: **0 005 763**
**A1**

# (12) EUROPÄISCHE PATENTANMELDUNG

(21) Anmeldenummer: 79101507.6

(22) Anmeldetag: 17.05.79

(51) Int. Cl.²: A 01 N 9/18
C 07 C 161/02, C 07 D 333/22

(30) Priorität: 30.05.78 DE 2823658

(43) Veröffentlichungstag der Anmeldung:
12.12.79 Patentblatt 79/25

(84) Benannte Vertragsstaaten:
AT BE CH DE FR GB IT NL

(71) Anmelder: BAYER Aktiengesellschaft
Zentralbereich Patente,Marken und Lizenzen Bayerwerk
D-5090 Leverkusen 1(DE)

(72) Erfinder: Oeckl, Siegfried, Dr.
Andreas-Gryphius-Strasse 9
D-5000 Köln 80(DE)

(72) Erfinder: Scheinpflug, Hans, Dr.
Am Thelenhof 15
D-5090 Leverkussen 1(DE)

(72) Erfinder: Kraus, Peter, Dr.
Düsseldorferstrasse 43
D-5000 Köln 80(DE)

## (54) Mittel zur Bekämpfung von Pflanzenbakteriosen, deren Verwendung und deren Herstellung.

(57) Verwendung von bekannten Acylhalogenmethylrhodaniden zur Bekämpfung von pflanzenschädigenden Bakterien.

Die Verbindungen der allgemeinen Formel

```
        X
        |
R-CO-C-SCN          (I)
        |
        Y
```

in welcher

R für Alkyl mit bis zu 6 Kohlenstoffatomen, den Thienyl-Rest, oder für gegebenenfalls durch Halogen, Hydroxy, Alkyl- oder Alkoxy-Gruppen mit jeweils bis zu 4 Kohlenstoffatomen, durch Nitro- oder weitere Phenyl-Gruppen substituiertes Phenyl oder für Naphthyl steht, und

X und Y für Halogen stehen und darüber hinaus noch einer der Reste X oder Y für Wasserstoff stehen kann,

weisen eine starke mikrobizide Wirkung auf und können zur Bekämpfung von unerwünschten Mikroorganismen praktisch eingesetzt werden.

Die Wirkstoffe sind für den Gebrauch als Pflanzenschutzmittel geeignet.

Sie sind besonders gut wirksam gegen bakterielle Pflanzenkrankheiten und zeigen in den entsprechenden Aufwandmengen und -konzentrationen auch eine Wirkung gegen phytopathogene Pilze.

EP 0 005 763 A1

BAYER AKTIENGESELLSCHAFT 5090 Leverkusen, Bayerwerk
Zentralbereich
Patente, Marken und Lizenzen Slr-kl
IIb

BEZEICHNUNG GEÄNDERT
siehe Titelseite

Mittel zur Bekämpfung von Pflanzenbakteriosen

Die vorliegende Erfindung betrifft die Verwendung von bekannten Acylhalogenmethylrhodaniden zur Bekämpfung von pflanzenschädigenden Bakterien.

Durch pathogene Bakterien verursachte Pflanzenkrankheiten breiten sich in zunehmendem Maße aus, so daß bereits jetzt die Anbauwürdigkeit einiger Kulturpflanzen in bestimmten Regionen wirtschaftlich gefährdet ist. Bedeutende Erreger entstammen der Familie der Pseudomonadaceae, z.B. Pseudomonas solanacearum, Pseudomonas lachrymans, Pseudomonas syringae, Xanthomonas citri, Xanthomonas oryzae, Xanthomonas vesicatoria, der Familie der Enterobacteriaceae, z.B. Erwinia amylovora, bzw. der Familie der der Corynebacteriaceae. Die bisher zur Verfügung stehenden Möglichkeiten zur Bekämpfung bzw. Verhütung dieser Krankheiten sind sehr aufwendig

und dabei noch unzureichend. Im praktischen Einsatz befinden sich hierfür zumeist Antibiotika, deren Herstellung teuer ist und die vielfach toxisch und unter atmosphärischen Bedingungen nur kurze Zeit stabil sind. Ferner dienen noch - wie schon lange bekannt - basische Kupfersalze, wie z.B. Kupferoxychlorid, oder Kupferhydroxid-Kupferchlorid-Mischungen -, zur Bekämpfung von Pflanzenkrankheiten (R. Wegler, Chemie der Pflanzenschutz- und Schädlingbekämpfungsmittel, Band 2, Springer-Verlag, Heidelberg (1970)). Es ist weiterhin bekannt (vgl. DE-OS 2 423 981 [Le A 15 169/I]), daß Acylhalogenmethylrhodanide eine Wirksamkeit gegen im technischen Bereich vorkommende Mikroorganismen, wie z.B. Schimmelpilze, Hefen, Bakterien und Schleime aufweisen. Sie können daher zur Konservierung verderblicher Güter verwendet werden, und werden vor allem zur Verhinderung des Mikrobenwachstums in kreislaufgeführten Industriewässern empfohlen. Endlich werden noch "Substituierte Dichlormethylthiocyanate" zur Bekämpfung von Nematoden, Arachniden, Arthropoden und Insekten, jedoch vor allem als Herbizide vorgeschlagen (US-PS 3 959 330).

Es wurde nun gefunden, daß die Acylhalogenmethylrhodanide der allgemeinen Formel

$$R\text{-}CO\text{-}\overset{X}{\underset{Y}{C}}\text{-}SCN \qquad (I)$$

in welcher

R für Alkyl mit bis zu 6 Kohlenstoffatomen, den Thienyl-Rest, oder für gegebenenfalls durch Halogen, Hydroxy, Alkyl- oder Alkoxy-Gruppen mit jeweils bis zu 4 Kohlenstoffatomen, durch Nitro- oder weitere Phenyl-Gruppen substituiertes Phenyl oder für Naphthyl steht, und

X und Y für Halogen stehen und darüber hinaus noch einer der Reste X oder Y für Wasserstoff stehen kann,

eine besonders gute Wirksamkeit gegen pflanzenschädigende Bakterien besitzen.

Es ist als überraschend zu bezeichnen, daß die erfindungsgemäß verwendbaren Verbindungen im Gegensatz zu den vorbekannten Dichlormethylthiocyanaten keinerlei herbizide Wirkung aufweisen. Dies heißt somit, daß keinerlei Pflanzenschäden entstehen und die erfindungsgemäße Verwendung zur Bekämpfung von Bakterien an Pflanzen erst ermöglicht wird.

Die erfindungsgemäß zu verwendenden Verbindungen sind durch die allgemeine Formel (I) definiert. Die Verbindungen sind bekannt (vgl. DE-OS 2 423 981 /Le A 15 169/, bzw. GB-PS 1 450 300), ebenso deren Herstellung aus den entsprechenden Acylmethylrhodaniden durch Umsetzung mit mindestens der stöchiometrisch erforderlichen Menge eines Halogens in Gegenwart eines Säureak-

zeptors im Temperaturbereich zwischen 0 und 100°C, vorzugsweise zwischen +10 und 60°C.

In der allgemeinen Formel I steht R vorzugsweise für Alkyl mit 1 bis 4 Kohlenstoffatomen, für den Thienyl-Rest, ferner für Phenyl, welches vorzugsweise durch Alkyl mit 1 bis 4 Kohlenstoffatomen, durch Methoxy, Hydroxy, Chlor, Brom, die Nitro-Gruppe oder weiteres Phenyl substituiert sein kann, und schließlich vorzugsweise für Naphthyl. X und Y stehen vorzugsweise für Chlor oder Brom, und darüber hinaus kann noch einer der Reste für Wasserstoff stehen.

Als Beispiele für erfindungsgemäße Wirkstoffe seien die α-Chlor-, α-Brom-, α,α-Dichlor- und α,α-Dibrom-Derivate der folgenden Acylmethylrhodanide genannt:

Phenacylrhodanid, 4-Nitro-phenacylrhodanid, 4-Hydroxy-phenacylrhodanid, 4-Methoxy-phenacylrhodanid, 4-Isopropylphenacylrhodanid, 4-Methyl-phenacylrhodanid, 4-Äthyl-phenylacylrhodanid, 4-Chlor-phenacylrhodanid, 3,4-Dichlor-phenacylrhodanid, 2,4,6-Trichlor-3-methyl-phenacylrhodanid, Thiocyanmethylnaphthyl-keton, Thiocyanmethyl-thienylketon und Thiocyanpinakolin.

Die erfindungsgemäßen Wirkstoffe weisen eine starke mikrobizide Wirkung auf und können zur Bekämpfung von unerwünschten Mikroorganismen praktisch eingesetzt werden. Die Wirkstoffe sind für den Gebrauch als Pflanzenschutzmittel geeignet.

Bakterizide Mittel werden im Pflanzenschutz zur Bekämpfung von Pseudomonadaceae, Rhizobiaceae, Enterobacteriaceae, Corynebacteriaceae und Streptomycetaceae eingesetzt.

Die gute Pflanzenverträglichkeit der Wirkstoffe in den zur Bekämpfung von Pflanzenkrankheiten notwendigen Konzentrationen erlaubt eine Behandlung von oberirdischen Pflanzenteilen, von Pflanz- und Saatgut, und des Bodens.

Die Wirkstoffe können in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chloräthylene oder Methylenchlorid, aliphatische Kohlenwasserstoffe, wie Cyclohexan oder Paraffine, z.B. Erdölfraktionen, Alkohole, wie Butanol oder Glycol, sowie deren Äther und Ester, Ketone, wie Aceton, Methyläthylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyäthylen-Fettsäure-Ester, Polyoxyäthylen-Fettalkohol-Äther, z.B. Alkylarylpolyglykol-äther, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azol-Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die erfindungsgemäßen Wirkstoffe können in den Formulierungen oder in den verschiedenen Anwendungsformen in Mischung mit anderen bekannten Wirkstoffen vorliegen, wie Fungiziden, Bakteriziden, Insektiziden, Akariziden, Nematiziden, Herbiziden, Schutzstoffen gegen Vogelfraß, Wuchsstoffen, Pflanzennährstoffen und Bodenstrukturverbesserungsmitteln.

Die Wirkstoffe können als solche in Form ihrer Formulierungen oder der daraus durch weiteres Verdünnen bereiteten Anwendungsformen, wie gebrauchsfertige Lösungen, Emulsionen, Suspensionen, Pulver, Pasten und Granulate angewendet werden. Die Anwendung geschieht in üblicher Weise, z.B. durch Gießen, Tauchen, Spritzen, Sprühen, Vernebeln, Verdampfen, Injizieren, Verschlämmen, Verstreichen, Stäuben, Streuen, Trockenbeizen, Feuchtbeizen, Naßbeizen, Schlämmbeizen oder Inkrustieren.

Bei der Behandlung von Pflanzenteilen können die Wirkstoffkonzentrationen in den Anwendungsformen in einem größeren Bereich variiert werden. Sie liegen im allgemeinen zwischen 1 und 0,0001 Gew.-%, vorzugsweise zwischen 0,5 und 0,001 %.

Bei der Saatgutbehandlung werden im allgemeinen Wirkstoffmengen von 0,001 bis 50 g je Kilogramm Saatgut, vorzugsweise 0,05 bis 5 g, benötigt.

Bei Behandlung des Bodens sind Wirkstoffmengen von 0,00001 bis 0,1 Gew.-%, vorzugsweise von 0,0001 bis 0,02 %, am Wirkungsort erforderlich.

Die erfindungsgemäßen Verbindungen sind besonders gut wirksam gegen bakterielle Pflanzenkrankheiten.

Diese werden verursacht durch Bakterien der Familie der Pseudomonadaceae, z.B. Pseudomonas solanacearum, Pseudomonas lachrymans, Pseudomonas syringae, Pseudomonas morsprunorum, Pseudomonas phaseolicola, Pseudomonas tabaci, Xanthomonas oryzae, Xanthomonas citri, Xanthomonas campestris, Xanthomonas vesicatoria, Xanthomonas malvacearum, Xanthomonas translucens, Xanthomonas begoniae, Xanthomonas pelargonii, der Familie der Rhizobiaceae, z.B. Agrobakterium tumefaciens, der Familie der Enterobacteriaceae, z.B. Erwinia amylovora, Erwinia mangifera, Erwinia carotovora, der Familie der Corynebacteriaceae, z.B. Corynebaceterium michiganense und der Familie der Streptomycetaceae, z.B. Streptomyces scabies.

Neben der bakteriziden Wirkung zeigen die erfindungsgemäßen Verbindungen in den entsprechenden Aufwandmengen und -konzentrationen auch eine Wirkung gegen phytopathogene Pilze. Fungizide Mittel im Pflanzenschutz werden eingesetzt zur Bekämpfung von Plasmodiophoromycetes, Oomycetes, Chytridiomycetes, Zygomycetes, Ascomycetes, Basidiomycetes, Deuteromycetes.

Z.B. zeigen die erfindungsgemäßen Verbindungen eine gute Wirkung gegen Getreiderostpilze (z.B. Puccinia recondita) und Pilze der Gattungen Phytophthora, Fusarium und Verticillium.

Daneben weisen die erfindungsgemäßen Verbindungen in den entsprechenden Aufwandmengen und -konzentrationen eine Wirkung gegen Hygieneschädlinge auf.

Die Verwendungsmöglichkeiten gehen aus den nachfolgenden Beispielen hervor:

Beispiel A

Agarplattentest

Verwendeter Nährboden:

20 Gewichtsteile Agar-Agar
200 Gewichtsteile Kartoffeldekokt
5 Gewichtsteile Malz
15 Gewichtsteile Dextrose
5 Gewichtsteile Pepton
2 Gewichtsteile Dinatriumhydrogenphosphat
0,3 Gewichtsteile Dicalciumnitrat

Verhältnis von Lösungsmittelgemisch zu Nährboden:

2 Gewichtsteile Lösungsmittelgemisch
100 Gewichtsteile Agarnährboden
Zusammensetzung Lösungsmittelgemisch:

0,19 Gewichtsteile Dimethylformamid oder Aceton
0,01 Gewichtsteile Emulgator Alkylarylpolyglykoläther
1,80 Gewichtsteile Wasser
2 Gewichtsteile Lösungsmittelgemisch

Man vermischt die für die gewünschte Wirkstoffkonzentration im Nährboden nötige Wirkstoffmenge mit der angegebenen Menge des Lösungsmittelgemisches. Das Konzentrat wird im genannten Mengenverhältnis mit dem flüssigen, auf 42°C abgekühlten Nährboden gründlich vermischt und in Petrischalen mit einem Durchmesser von 9 cm gegossen.

Ferner werden Kontrollplatten ohne Präparatbeimischung aufgestellt.

Ist der Nährboden erkaltet und fest, werden die Platten mit den zu prüfenden Pilz- und Bakterienarten beimpft und bei etwa 22°C inkubiert.

Zur Prüfung wurden die Bakterienarten Erwinia carotovora, Erwinia mangiferae, Pseudomonas lachrymans, Xanthomonas pelargonii, Xanthomonas vesicatoria, Xanthomonas malvacearum und Xanthomonas campestris herangezogen.

Die Auswertung erfolgt je nach der Wachstumsgeschwindigkeit der Organismen nach 2 bis 4 Tagen. Bei der Auswertung wird das radiale Wachstum auf den behandelten Nährboden mit dem Wachstum auf dem Kontrollnährboden verglichen. Die Bonitierung des Wachstums geschieht mit folgenden Kennzahlen:

1 kein Wachstum
bis 3 sehr starke Hemmung des Wachstums
bis 5 mittelstarke Hemmung des Wachstums
bis 7 schwache Hemmung des Wachsums
9 Wachstum gleich der unbehandelten Kontrolle

Bei diesen Test zeigen z.B. die folgenden Verbindungen eine überlegene Wirkung gegenüber dem Stand der Technik:

Agarplatten-Test

| Wirkstoff | Konzentration [ppm] | Bakterien: Erwinia carotovora | Erwinia mangiferae | Pseudomonas lachrymans | Xanthomonas pelargonii | Xanthomonas vesicatoria | Xanthomonas malvacearum | Xanthomonas campestris |
|---|---|---|---|---|---|---|---|---|
| Kupferoxychlorid $3\ Cu(OH)_2 \cdot CuCl_2 \cdot xH_2O$ (bekannt) | 25 | 7 | 9 | 9 | 9 | 9 | 9 | 9 |
| 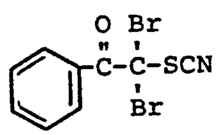 | 25 | 1 | 1 | 3 | 1 | 1 | 1 | 1 |
| 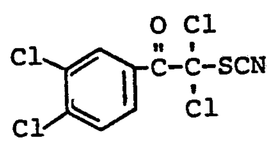 | 25 | 1 | 1 | 3 | 1 | 1 | 1 | 1 |
| 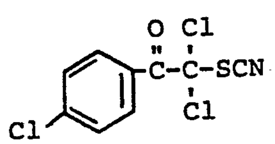 | 25 | 1 | 1 | 3 | 1 | 1 | 1 | 1 |
| 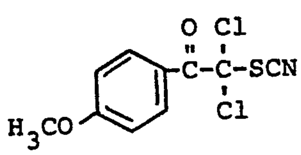 | 25 | 1 | 1 | 1 | 1 | 1 | 1 | 1 |

Agarplatten-Test

| Wirkstoff | Bakterien | | | | | | | |
|---|---|---|---|---|---|---|---|---|
| | Konzentration [ppm] | Erwinia carotovora | Erwinia mangiferae | Pseudomonas lachrymans | Xanthomonas pelargonii | Xanthomonas vesicatoria | Xanthomonas malvacearum | Xanthomonas campestris |
| 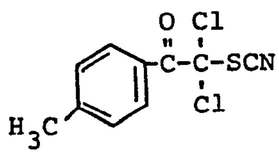 | 25 | 1 | 1 | 3 | 1 | 1 | 1 | 1 |
| 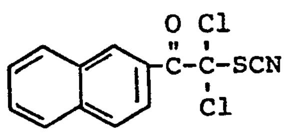 | 25 | 1 | 1 | 3 | 1 | 1 | 1 | 1 |
| 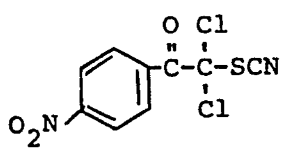 | 25 | 1 | 1 | 1 | 1 | 1 | 1 | 1 |
| 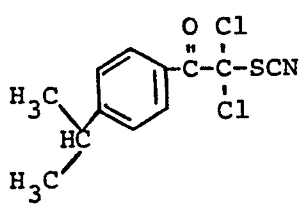 | 25 | 1 | 1 | 3 | 1 | 1 | 1 | 1 |
| 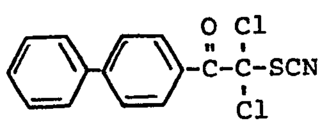 | 25 | 1 | 1 | 3 | 1 | 1 | 2 | 1 |

Beispiel B

Bakterien-Test / Xanthomonas oryzae

| | | |
|---|---|---|
| Lösungsmittel: | 11,75 Gewichtsteile | Aceton |
| Dispergiermittel: | 0,75 Gewichtsteile | Alkylarylpolyglykoläther |
| Wasser: | 987,50 Gewichtsteile | |
| andere Zusätze: | - Gewichtsteile | - |

Man vermischt die für die gewünschte Wirkstoffkonzentration in der Spritzflüssigkeit nötige Wirkstoffmenge mit der angegebenen Menge des Lösungsmittels und des Dispergiermittels und verdünnt das Konzentrat mit der angegebenen Menge Wasser.

Mit der Spritzflüssigkeit bespritzt man 30 etwa 40 Tage alte Reispflanzen bis zur Tropfnässe. Die Pflanzen verbleiben bis zum Abtrocknen in einem Gewächshaus bei Temperaturen von 22 bis 24°C und einer relativen Luftfeuchtigkeit von etwa 70 %. Danach werden Nadeln in eine wäßrige Bakteriensuspension von Xanthomonas oryzae getaucht und die Pflanzen durch Anstechen der Blätter inokuliert. Die Pflanzen stehen nach der Inokulation 24 Stunden bei 100 % relativer Luftfeuchtigkeit und danach in einem Raum bei 26 - 28°C und 80 % relativer Luftfeuchtigkeit. 10 Tage nach der Inokulation wird der Befall bei allen durch Stich verletzten, inokulierten Blätter von vorher mit Präparat behandelten Pflanzen in Wertzahlen von 1 bis 9 ausgewertet. 1 bedeutet 100 %ige Wirkung, 3 = gute Wirkung, 5 = mäßige Wirkung und 9 = keine Wirkung.

Bei diesem Test zeigen z.B. die folgenden Verbindungen eine überlegene Wirkung gegenüber dem Stand der Technik:

T a b e l l e

Bakterien-Test / Xanthomonas oryzae

| Wirkstoff | Befallswertzahl bei einer Wirkstoffkonzentration (in %) von 0,025 |
| --- | --- |
| Kupferoxychlorid<br>3 $Cu(OH)_2 \cdot CuCl_2 \cdot xH_2O$<br>(bekannt) | 7 |
| 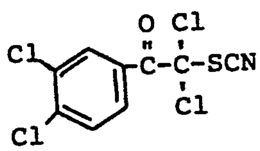 | 3 |
| 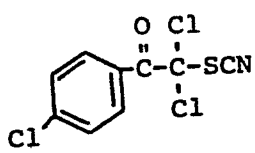 | 5 |
| 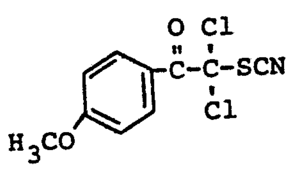 | 5 |
| 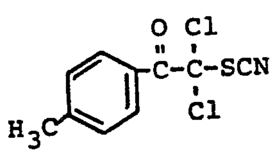 | 5 |
| 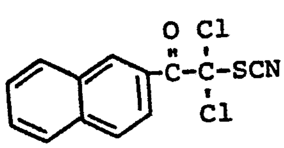 | 3 |
| 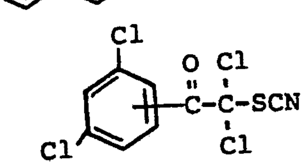 | 3 |

## Herstellungsbeispiele

### Beispiel 1

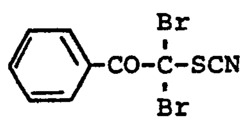

100 g (0,56 Mol) Phenacylrhodanid und 154 g (1,12 Mol) Natriumacetat werden in 1 l Eisessig gelöst. Unter Rühren werden bei 20°C 179 g (1,12 Mol) Brom zugetropft. Nach vollständiger Zugabe wird noch solange auf 40 bis 60°C erwärmt, bis die Farbe von rot nach hellgelb umgeschlagen ist. Dann wird Natriumbromid abfiltriert, die Lösung eingedampft, mit Wasser verrührt und die Kristallmasse abgesaugt und getrocknet. Man erhält 182 g (96 % der Theorie) $\alpha,\alpha$-Dibromphenacylrhodanid vom Fp. 98°C.

### Beispiel 2

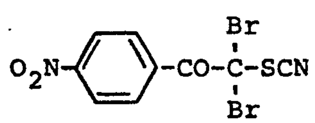

19 g (0,08 Mol) 4-Nitro-phenacylrhodanid und 22 g (0,16 Mol) Natriumacetat in 200 ml Eisessig werden bei 10°C mit 27 g (0,16 Mol) Brom umgesetzt. Nach Entfärbung wird analog Beispiel 1 aufgearbeitet. Die Ausbeute beträgt 26,6 g (94 % der Theorie) 4-Nitro- $\alpha,\alpha$-dibromphenacylrhodanid vom Fp. 105°C.

Beispiel 3

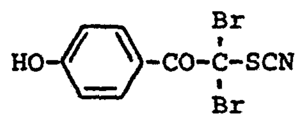

19,3 g (0,1 Mol) 4-Hydroxy-phenacylrhodanid und 27 g (0,2 Mol) Natriumacetat in 200 ml Eisessig werden bei 18°C mit 32 g (0,2 Mol) Brom umgesetzt. Nach Entfernung von Natriumbromid und Lösungsmittel wird mit Wasser verrührt, wobei ein brauner Niederschlag entsteht, der nach Absaugen aus Äthanol umkristallisiert wird. Die Ausbeute beträgt 12,4 g (32 % der Theorie) 4-Hydroxy-$\alpha$,$\alpha$-dibrom-phenacylrhodanid vom Fp. 132°C.

Beispiel 4

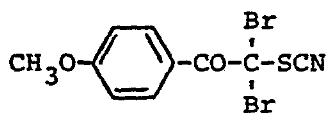

20,7 g (0,1 Mol) 4-Methoxy-phenacylrhodanid und 27 g (0,2 Mol) Natriumacetat werden in 200 ml Eisessig suspendiert und mit 32 g (0,2 Mol) Brom auf einmal versetzt. Nach 24-stündigem Rühren bei 20°C wird Natriumbromid abgesaugt und das farblose Filtrat in üblicher Weise aufgearbeitet. Die Ausbeute beträgt 53,2 g (91 % der Theorie) 4-Methoxy-$\alpha$,$\alpha$-dibrom-phenacylrhodanid vom Fp. 40°C.

Beispiel 5

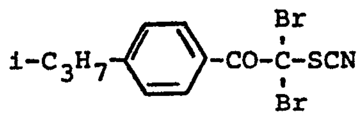

22,3 g (0,1 Mol) 4-Isopropyl-phenacylrhodanid und 27 g (0,2 Mol) Natriumacetat werden in 200 ml Eisessig mit 32 g (0,2 Mol) Brom versetzt und 24 Stunden bei 20°C stehengelassen, wobei Entfärbung eintritt. Es wird in üblicher Weise aufgearbeitet. Ausbeute: 26,5 g (70 % der Theorie) 4-Isopropyl-α,α-dibrom-phenacylrhodanid vom Fp. 100°C.

Beispiel 6

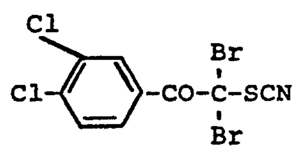

15 g (0,06 Mol) 3,4-Dichlor-phenacylrhodanid und 16,7 g (0,12 Mol) Natriumacetat werden in 250 ml Eisessig bei 12°C mit 19,6 g (0,12 Mol) Brom umgesetzt. Nach Entfärbung wird in üblicher Weise aufgearbeitet. Ausbeute: 23,3 g (94 % der Theorie) 3,4-Dichlor-α,α-dibrom-phenacylrhodanid vom Fp. 95°C.

Beispiel 7

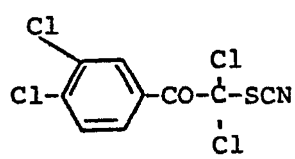

12,3 g (0,05 Mol) 3,4-Dichlor-phenacylrhodanid und 7,7 g (0,1 Mol) Ammoniumacetat werden in 250 ml Eisessig mit 7,0 g (0,1 Mol) Chlor umgesetzt. Nach Entfärbung wird direkt eingeengt und mit Wasser verrührt. Die Kristalle werden aus Ligroin umkristallisiert. Ausbeute: 13 g (84 % der Theorie) 3,4-Dichlor- α,α-dichlor-phenacylrhodanid vom Fp. 50°C.

Beispiel 8

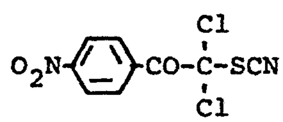

27,5 g (0,14 Mol) 4-Nitro-phenacylrhodanid und 23 g (0,28 Mol) wasserfreies Natriumacetat werden in 170 ml Eisessig bei einer Temperatur von 25 bis 30°C mit 19,6 g (0,28 Mol) Chlor umgesetzt. Nach Entfärbung wird die Reaktionsmischung in üblicher Weise aufgearbeitet. Man erhält 31,5 g (77 % der Theorie) p-Nitro-α,α-dichlor-phenacylrhodanid vom Fp. 83 - 84°C.

Beispiel 9

20,7 g (0,1 Mol)

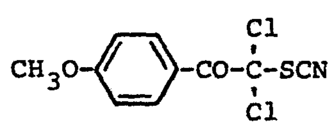

20,7 g (0,1 Mol) 4-Methoxy-phenacylrhodanid und 27 g (0,2 Mol) Natriumacetat werden in 200 ml Eisessig bei 30 - 40°C mit 14 g (0,2 Mol) Chlor umgesetzt. Nach

Entfärbung der Reaktionsmischung wird in üblicher Weise aufgearbeitet. Ausbeute: 20,6 g (75 % der Theorie) 4-Methoxy-$\alpha,\alpha$-dichlor-phenacylrhodanid vom Fp. 76 - 80°C.

Beispiel 10

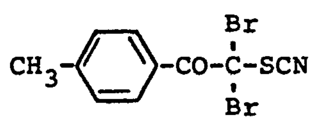

19 g (0,1 Mol) 4-Methyl-phenacylrhodanid und 42 g (0,3 Mol) Natriumacetat werden in 200 ml Eisessig bei einer Temperatur von 40 - 50°C mit 16,8 g (0,12 Mol) Chlor umgesetzt. Nach 5 Stunden wird in üblicher Weise aufgearbeitet. Ausbeute: 23 g (89 % der Theorie) 4-Methyl-$\alpha,\alpha$-dichlor-phenacylrhodanid vom Fp. 57°C.

Beispiel 11

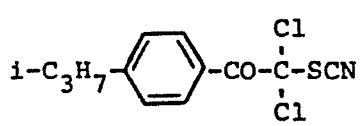

41 g (1,9 Mol) 4-Isopropyl-phenacylrhodanid und 31,3 g (2,8 Mol) wasserfreies Natriumacetat werden in 150 ml Eisessig bei +15°C mit 26,6 g (0,4 Mol) Chlor umgesetzt. Nach Entfärbung der Reaktionsmischung wird in üblicher Weise aufgearbeitet. Ausbeute: 44,8 g (82 % der Theorie) 4-Isopropyl-$\alpha,\alpha$-dichlor-phenacylrhodanid vom Fp. 71 - 73°C.

Beispiel 12

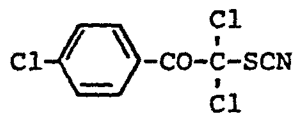

25 g (0,12 Mol) 4-Chlor-phenacylrhodanid und 33 g (0,24 Mol) Natriumacetat werden in 350 ml Eisessig im Temperaturbereich zwischen 20 und 30°C mit 16,8g (0,24 Mol) Chlor umgesetzt. Nach Entfärbung der Reaktionsmischung wird in üblicher Weise aufgearbeitet. Ausbeute: 29,5 g (90 % der Theorie) 4-Chlor-$\alpha,\alpha$-dichlor-phenacylrhodanid vom Fp. 108°C.

Beispiel 13

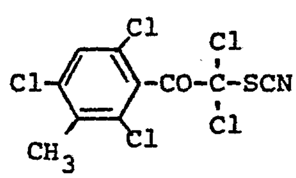

21 g (0,07 Mol) 2,4,6-Trichlor-3-methyl-phenacylrhodanid und 11,7 g wasserfreies Natriumacetat (0,14 Mol) werden bei 20°C mit 10,0g (0,14 Mol) Chlor umgesetzt. Nach Entfärbung wird in üblicher Weise aufgearbeitet. Ausbeute: 25 g (98 % der Theorie) 2,4,6-Trichlor-3-methyl-$\alpha\alpha$ -dichlor-phenacylrhodanid vom Fp. 70 - 72°C.

Beispiel 14

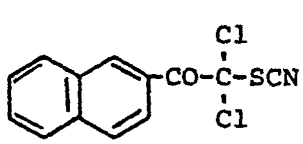

30 g (0,13 Mol) Thiocyanmethyl-ß-naphthyl-keton und 35,8 g (0,26 Mol) Natriumacetat werden bei +20°C bis 30°C in 300 ml Eisessig mit 18,4 g Chlor (0,26 Mol) umgesetzt. Nach Entfärbung wird in üblicher Weise aufgearbeitet. Ausbeute: 30,2 g (79 % der Theorie) Thiocyan-dichlormethyl-ß-naphthyl-keton, eine Flüssigkeit mit dem Brechungsindex $n_D^{20}$ = 1,6568.

Beispiel 15

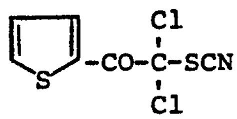

30 g (0,17 Mol) Thiocyanmethyl-thienyl-keton und 46 g (0,34 Mol) Natriumacetat werden bei +15°C bis 20°C in 150 ml Eisessig mit 24 g (0,34 Mol) Chlor umgesetzt. Nach Entfärbung wird in üblicher Weise aufgearbeitet. Ausbeute: 30 g (71 % der Theorie) Thiocyan-dichlormethyl-thienyl-keton vom Fp. 75 - 78°C.

Beispiel 16

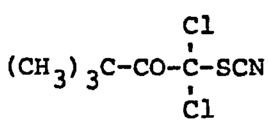

Zu 15,7 g (0,1 Mol) α-Thiocyan-pinakolin und 18 g (0,22 Mol) Natriumacetat in 70 ml Eisessig wurden in

ca. 1 Stunde 14,2 g (0,2 Mol) Chlor bei etwa 30°C eingeleitet. Dann wurde 30 Min. bei 40°C nachgerührt, die entfärbte Suspension eingeengt, der Rückstand mit Wasser versetzt, mit Äthylenchlorid ausgeschüttelt und die organische Phase eingeengt.

Man erhielt 19 g (das sind 84 % der Theorie) α,α-Dichlor-α-thiocyan-pinakolin in Form eines honiggelben Öls, das beim Stehen kristallisierte. Nach Verrühren mit Äthanol, Waschen und Trocknen werden farblose Kristalle vom Fp. 52°C erhalten.

<u>Beispiel 17</u>

$$(CH_3)_3C\text{-}CO\text{-}\overset{\displaystyle Cl}{\overset{|}{C}}H\text{-}SCN$$

Wenn wie in Beispiel 16 gearbeitet wird, jedoch nur die Hälfte der Chlormenge eingesetzt wird, so erhält man nach der Aufarbeitung 14,3 g (das sind 75 % der Theorie) α-Chlor-α-thiocyan-pinakolin in Form eines hellgelben, viskosen Öles.

<u>Beispiel 18</u>

$$(CH_3)_3C\text{-}CO\text{-}\underset{\underset{\displaystyle Br}{|}}{\overset{\overset{\displaystyle Br}{|}}{C}}\text{-}SCN$$

Zu 13 g (0,083 Mol) α-Thiocyan-pinaklin und 14 g (0,17 Mol) Natriumacetat in 80 ml Eisessig wurden bei

einer Temperatur von 25 bis 30°C 26,5 g (0,166 Mol) Brom zugetropft und 4 Stunden bei 40°C nachgerührt. Die gelbe Suspension wurde dann in 400 ml Eiswasser eingerührt, einige ml Natriumbisulfit-Lösung zugegeben, um Bromreste zu entfernen, und sodann die weiße Suspension abgesaugt, der Rückstand gewaschen und getrocknet. Man erhält 22 g (das sind 84 % der Theorie) α,α-Dibrom-α-thiocyan-pinakolin in Form farbloser Kristalle vom Fp. 75°C.

Beispiel 19

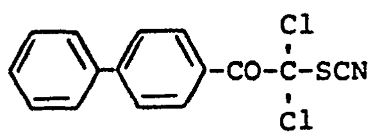

10 g (0,04 Mol) 4-Phenyl-phenacylrhodanid und 7,9 g (0,096 Mol) Natriumacetat werden in 100 ml Eisessig suspendiert; sodann wird bei einer Temperatur von 25 bis 30°C 5,7 g (0,08 Mol) Chlor eingeleitet. Nach 1,5 Stunden Nachrühren war die Umsetzung beendet. Das Reaktionsgemisch wurde in 1,8 l Eiswasser gegossen, und der feine weiße Niederschlag abgesaugt und getrocknet. Man erhält 11,5 g (das sind 89 % der Theorie) 4-Phenyl-α,α-dichlor-phenacylrhodanid vom Fp. 106°C.

Beispiel 20

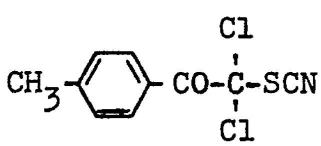

Die Verbindung wurde entsprechend den obigen Verbindungen dargestellt. Fp. 57° C

Beispiel 21

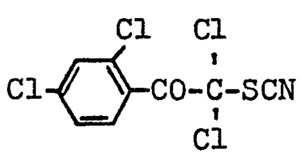

Die Verbindung wurde entsprechend den obigen Verbindungen dargestellt. Fp. 48° C.

Patentansprüche

1. Bakterizide Mittel, gekennzeichnet durch einen Gehalt an mindestens einem Acylhalogenmethylrhodanid der allgemeinen Formel

$$R\text{-}CO\text{-}\overset{X}{\underset{Y}{C}}\text{-}SCN$$

in welcher

R für Alkyl mit bis zu 6 Kohlenstoffatomen, den Thienyl-Rest, oder gegebenenfalls durch Halogen, Hydroxy, Alkyl- oder Alkoxy-Gruppen mit jeweils bis zu 4 Kohlenstoffatomen, durch Nitro- oder weitere Phenyl-Gruppen substituiertes Phenyl oder für Naphthyl steht, und

X und Y für Halogen stehen und darüber hinaus noch einer der Reste X oder Y für Wasserstoff stehen kann.

2. Verfahren zur Bekämpfung von Bakterien, dadurch gekennzeichnet, daß man Acylhalogenmethylrhodanide gemäß Anspruch 1 auf Bakterien oder ihren Lebensraum einwirken läßt.

3. Verwendung von Acylhalogenmethylrhodaniden gemäß Anspruch 1 zur Bekämpfung von Bakterien.

4. Verfahren zur Herstellung von bakteriziden Mitteln, dadurch gekennzeichnet, daß man Acylhalogenmethylrhodanide gemäß Anspruch 1 mit Streckmitteln und/oder oberflächenaktiven Mitteln vermischt.

0005763

Europäisches Patentamt

# EUROPÄISCHER RECHERCHENBERICHT

Nummer der Anmeldung

EP 79 10 1507

| EINSCHLÄGIGE DOKUMENTE | | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| X | DE - B - 1 053 857 (BAYER)<br>* Spalte 4; Anspruch *<br>-- | 1-4 | A 01 N 9/18<br>C 07 C 161/02<br>C 07 D 333/22 |
| X | US - A - 3 222 248 (G.E. LUKES)<br>* Spalten 1,2 *<br>-- | 1-4 | |
| X | DE - B - 1 131 461 (BAYER)<br>* Spalten 3,4; Beispiele *<br>-- | 1-4 | RECHERCHIERTE SACHGEBIETE (Int. Cl.²) |
| XD | DE - A - 2 423 981 (BAYER)<br>* Spalte 4, Zeilen 1-16 *<br>-- | 1-4 | A 01 N 9/18 |
| A | DE - A - 2 536 252 (BAYER)<br>---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 06-09-1979 | FELTRE |